# EUROPEAN PATENT APPLICATION

(11) **EP 2 457 478 A1**
(43) Date of publication of application: **30.05.2012**
(21) Application number: 11190805.9
(22) Date of filing: 25.11.2011
(51) Int. Cl.: A47J 37/06

(54) **A method for operating electrical grills of cooking devices**

(30) Priority: 26.11.2010 TR 201009785
(71) Applicant: Vestel Beyaz Esya Sanayi ve Ticaret A.S., 45030 Manisa (TR)
(72) Inventor: Tumba, Yesim, 45030 Manisa (TR); Simsek, Omur, 45030 Manisa (TR)
(74) Representative: Cayli, Hülya

(57) **Abstract**

The method which is the subject matter of the invention has been developed for electrical grills in cooking devices. Accordingly, the electrical heater is powered uninterruptedly for a predetermined time which may vary in accordance with the cooking program; after this time has elapsed, the oven internal temperature is checked by a thermostat; and the electric power supply of the electrical grill is periodically switched off and on.

## Description

### Technical Field

Present invention relates to a method for operating electrical grills provided in cooking devices.

### Prior Art

In the state of the art, the operation of the electrical grills is conducted by such components as thermostats or microprocessors. These components ensure that the electrical grill is powered at certain periods, and this power is turned off at certain times. In other words, electrical grills are powered by on and off method. This situation, however, gives rise to poor performance in cooking foods which require short cooking time since the grill is not powered at times.

Published patent application US4894518 of the prior art discloses checking whether an oven, which is initially operated independently from the internal temperature values, has reached a certain temperature or not by carrying out constant measurements. Published patent application GB2199706, which is another prior art document, discloses a resistance oven which operates at full power at the first stage and which is then operated under the control of a microcontroller. The ovens disclosed in both applications are hard to control and require intelligent electronic circuits. For this reason, their applications become quite expensive.

### Brief Description of the Invention

The method which is the subject matter of the invention has been developed for electrical grills in cooking devices. Accordingly, the electrical heater is powered uninterruptedly for a predetermined time which may vary in accordance with the cooking program; after this time has elapsed, the oven internal temperature is checked by a thermostat; and the electric power supply of the electrical grill is periodically switched off and on.

### Objective of the Invention

The aim of the invention is to develop a method which regulates the operation of the electrical grills by using simple and cheap control elements.

Another aim of the invention is to improve the cooking performance of the electrical grills by mentioned method.

### Disclosure of the Invention

The method of the invention controls the operation of the electrical grills provided in cooking devices. To this end, the electrical heater is powered uninterruptedly for a certain time when the device is started. This is a factory adjusted time for a timer circuit, which is set during manufacture; various times are set for various cooking programs. Thus, the time during which the grill is uninterruptedly powered at the beginning may vary in accordance with the type of cooking.

After said time has elapsed, oven internal temperature is checked by a thermostat and the power supply of the electrical grill is switched off and on. This operation is continued periodically within the total cooking time.

After the electrical grill is supplied with an initial uninterrupted power, a temperature check by a simple and cheap thermostat is a cost decreasing factor; uninterrupted power supply for predetermined time also improves the cooking performance.

## Claims

1. A method for operating electrical grills of cooking devices **characterized in that** when the device is started, the electrical heater is supplied with uninterrupted power for a predetermined time which may vary in accordance with the cooking program; after this time has elapsed, the power supply of the electrical grill is periodically switched off and on by checking the oven internal temperature value by means of a thermostat.
